Europäisches Patentamt

European Patent Office

Office européen des brevets

(19)

(11) Veröffentlichungsnummer: **0 088 475**
**A2**

(12) **EUROPÄISCHE PATENTANMELDUNG**

(21) Anmeldenummer: **83200296.8**

(22) Anmeldetag: **28.02.83**

(51) Int. Cl.³: **G 01 N 21/74**

(30) Priorität: **08.03.82 DE 3208247**

(43) Veröffentlichungstag der Anmeldung: **14.09.83**
**Patentblatt 83/37**

(84) Benannte Vertragsstaaten: **CH DE FR GB IT LI**

(71) Anmelder: **Philips Patentverwaltung GmbH,**
**Steindamm 94, D-2000 Hamburg 1 (DE)**
(84) Benannte Vertragsstaaten: **DE**

(71) Anmelder: **N.V. Philips' Gloeilampenfabrieken,**
**Groenewoudseweg 1, NL-5621 BA Eindhoven (NL)**
(84) Benannte Vertragsstaaten: **CH FR GB IT LI**

(72) Erfinder: **Lersmacher, Bernhard, Dr.,**
**Schlossweiherstrasse 31, D-5100 Aachen (DE)**
Erfinder: **Knippenberg, Wilhelmus Franziskus, Dr.,**
**Antoon-Koolenlaan 11, Aalst (NL)**

(74) Vertreter: **Piegler, Harald, Dipl.-Chem. et al, Philips**
**Patentverwaltung GmbH Steindamm 94,**
**D-2000 Hamburg 1 (DE)**

(54) Cuvette für die Atom-Absorptions-Spektrometrie.

(57) Die Cuvette besteht aus einem hohlen Grundkörper (1) aus pyrolytischem Graphit, der aussen und/oder innen durch mindestens stellenweise mechanische Abtragung bearbeitet ist. Dadurch, dass die bearbeiteten Flächen (2) die Aussen- bzw. Innenfläche der Cuvette bilden, also die Cuvetten aus formbearbeitetem, aber nicht nachbeschichtetem oder versiegeltem pyrolytischem Graphit bestehen, werden – bei gleicher oder sogar erhöhter Festigkeit (axialer Kompressionsdruck) – Cuvetten mit wesentlich geringeren Wandstärken und damit auch wesentlich geringerer Masse geschaffen als handelsübliche Graphitcuvetten mit oder ohne Pyrographitbeschichtung.

0088475

"Cuvette für die Atom-Absorptions-Spektrometrie"

Die Erfindung betrifft eine Cuvette für die Atom-Absorptions-Spektrometrie (AAS), die aus einem hohlen Grundkörper aus pyrolytischem Graphit besteht, der außen und/oder innen durch mindestens stellenweise mechanische Abtragung bearbeitet ist.

Die Funktion von Cuvetten für die AAS, insbesondere für die flammenlose AAS, d.h. für die AAS mit elektrothermischer Anregung, sowie Werkstoffe und Verfahren zur Herstellung derselben sind bekannt. Insbesondere ist die hervorragende Bedeutung von gut orientiertem pyrolytischem Graphit sowohl als protektive Schicht auf einem Grundkörper aus anderem Material, wie beispielsweise Elektrographit, als auch als Basismaterial für die Cuvette bekannt. In diesem Zusammenhang sei besonders die DE-OS 29 49 275 erwähnt. Die dort beschriebene Verfahrensweise hat im wesentlichen eine vorteilhafte Kombination von pyrolytischem Graphit als Grundkörper einer Cuvette und zugleich als Protektivschicht auf demselben zum Gegenstand. In dieser Kombination erfährt der Grundkörper vor Aufbringen der Protektivschicht eine mechanische Bearbeitung vornehmlich durch Schleifen, Schneiden und Bohren, um ihm die vorgeschriebene Form und Abmessungen zu erteilen. Andere als die genannten Bearbeitungsmethoden wie z.B. Laserschneiden und -bohren, Funkenerosion und Ultraschallbearbeitung können zwecks Herstellung bestimmter Formen und Abmessungen ebenfalls angewendet werden. Insbesondere ist der erwähnte Schleifprozeß die angemessene Bearbeitungsmethode, wenn eine bestimmte Wandstärke der Cuvette mit engen Wanddickentoleranzen zu realisieren ist. Eine vorgegebene Wanddicke kann zwar im Prinzip unmittelbar durch geeignete Wahl der Abscheidungsparameter wie z.B. Druck, Temperatur und Zeit erreicht werden. Doch ist dies in der Praxis, bei der eine große Stückzahl in einem entsprechend großen Reaktor gleichzeitig hergestellt werden soll, nicht zu realisieren, da hier in Abhängigkeit vom Ort des Substrates im Reaktor Abscheidungen unterschiedlicher Dicke bzw. Wandstärke entstehen. Der Schleifprozeß selbst kann sowohl von außen als auch von innen her erfolgen. Er wird im allgemeinen dadurch erleichtert, daß es sich bei den AAS-Cuvetten meistens um zylindersymmetrische, zumindest aber rotationssymmetrische rohrförmige Körper handelt. Alle genannten Bearbeitungen haben zur Folge, daß die "natürlich gewachsenen" Oberflächen des aus der Gasphase abgeschiedenen pyrolytischen Graphits beschädigt werden, d.h. daß durch die Bearbeitung auf den chemisch relativ inerten Oberflächen - insbesondere auf den Basisflächen (0002) - eine große Anzahl reaktiver Zentren erzeugt werden, wodurch sich generell die chemische Wechselwirkung der Cuvettenoberfläche mit anderen Stoffen verstärkt. Dieser "Aktivierungseffekt" ist in gewisser Hinsicht von Vorteil für das Analysegeschehen, als damit eine Reduktion der meistens als Oxid vorliegenden Probe verbunden ist. Generell bedeutet er jedoch eine Verminderung der Lebensdauer oder der Wiederverwendbarkeit der Cuvette. Die in diesem Zusammenhang durchgeführten Untersuchungen führten zur Konzeption einer Cuvette mit "passivierter" Oberfläche, wie sie als ein spezieller Cuvettentyp in der DE-OS 29 49 275 beschrieben ist. Kennzeichnendes Merkmal der darin geschilderten Verfahrensweise ist, daß die durch die Bearbeitung verursachte Erhöhung der chemischen Reaktivität auf der Cuvettenoberfläche, sowie die durch den Werkzeugdruck bzw. Bearbeitungskräfte entstandenen interlaminaren Risse an Schnittkanten und Bohrlöchern durch Anbringen von mindestens einer weiteren Schicht von pyrolytischem Graphit auf dem Grundkörper (aus Pyrographit) blockiert bzw. versiegelt wird. Das Verfahren nach der DE-OS 29 49 275 führt zu einer AAS-Cuvette, die zusätzlich zu den durch die ausschließliche Verwendung von pyrolytischem Graphit bedingten Vorzügen durch eine besonders hohe Lebensdauer gekennzeichnet ist. Frühere Untersuchungen zur chemischen Reaktivität von Graphitoberfläche hatten zu einer in der DE-OS 30 04 812 beschriebenen Konzeption einer AAS-Cuvette geführt, bei der durch unterschiedliche Maßnahmen eine gezielte Erhöhung der Reaktivität herbeigeführt wurde. Diese Maßnahmen bestanden in folgendem:

a) Anbringung einer stark fehlorientierten und damit chemisch aktiven Kohlenstoffschicht (Ruß) auf einer Graphitcuvette, die ihrerseits mit einer protektiven Schicht aus pyrolytischem Graphit bedeckt ist

b) mechanische Aufrauhung der unter a) genannten Protektivschicht beispielsweise durch schleifende (abtragende) Oberflächenbehandlung mit Quarzsand o.ä.

Beide Nachbehandlungsschritte gemäß der DE-OS 29 49 275 wurden an gebräuchlichen (handelsüblichen) beschichteten Graphitcuvetten, also an Rohren mit relativ großen Wandstärken (d ≈ 0,8 bis 1,0 mm) durchgeführt und haben ausdrücklich den Zweck einer chemischen Aktivierung im Sinne einer Erhöhung ihrer Reduktionswirkung auf in Verbindungsform vorliegender Analysensubstanz. Anderweitig beschriebene Maßnahmen (z.B. DE-AS 23 23 774, DE-OS 25 54 950, US-PS 4 11 563) der "Aufrauhung" in Form eingearbeiteter, makroskopischer Kerben oder Rillen in den Cuvettenkörper selbst oder in einen zusätzlichen Einsatz (Insert) haben dagegen den Zweck, die zu analysierende Probe möglichst an einem bestimmten Ort (z.B. dem der höchsten Temperatur) möglichst lange zu konzentrieren, also die Benetzungsneigung des Graphitrohres durch die Probe wenigstens teilweise zu kompensieren. In einem anderen Falle (DE-OS 25 58 948) dient die mechanische Aufrauhung der äußeren Cuvettenoberfläche dazu, den Emissionskoeffizienten für thermische Strahlung zwecks genauerer Temperaturmessung zu "konservieren".

Der Erfindung liegt die Aufgabe zugrunde, eine AAS-Cuvette aus pyrolytischem Graphit zu schaffen, die bei gleicher oder sogar erhöhter Festigkeit (axialer Kompressionsdruck) wesentlich geringere Wandstärken und damit auch wesentlich geringere Masse aufweist als handelsübliche Graphitcuvetten mit oder ohne Pyrographitbeschichtung.

Diese Aufgabe wird erfindungsgemäß durch eine Cuvette der eingangs genannten Art gelöst, bei der die bearbeiteten Flächen die Außen- bzw. Innenfläche der Cuvette bilden.

Der hohle Grundkörper der Cuvette ist vorzugsweise ein Zylinder bzw. ein Rohr. Die Wanddicke des Grundkörpers beträgt vorzugsweise 50 $\mu$m bis 1000 $\mu$m, insbesondere 100 $\mu$m bis 300 $\mu$m.

Untersuchungen zur Erprobung von bekannten Cuvettentypen haben nämlich zu dem unerwarteten Ergebnis geführt, daß es in vielen Fällen für analytische Bestimmungen nach der AAS-Methode sehr vorteilhaft ist, Cuvetten aus pyrolytischem Graphit in dem Zustand zu benutzen, in dem sie sich nach der oben geschilderten formgebenden Bearbeitung und einer sich daran anschließenden Reinigung befinden, also ohne zusätzliche versiegelnde Endbeschichtung. Überraschend war dabei besonders die Tatsache, daß sich solche Cuvetten bei hinreichender Festigkeit (in bezug auf den Kontaktierungsdruck) mit ungewöhnlich geringen Wandstärken herstellen und verwenden lassen und dabei eine für die meisten Anforderungen völlig ausreichende Lebensdauer besitzen. Diese unerwarteten Feststellungen mögen als Erklärung dafür gelten, daß im einschlägigen Schrifttum keine Hinweise auf AAS-Cuvetten dieser Art zu finden sind. Die beobachteten (und gemessenen) Vorzüge von nichtversiegelten Pyrographitcuvetten der erfindungsgemäßen Art lassen sich im wesentlichen nach drei Merkmalen beschreiben:

1. Chemische Reaktivität

Sie haben im allgemeinen eine erhöhte Reaktivität (höheres Reduktionspotential) als versiegelte Pyrographitcuvetten, was sich besonders günstig auf den Aufschluß von Verbindungen (z.B. Oxiden) während des Analysenablaufs auswirkt. Es wurde in diesem Zusammenhang auch die überraschende Beobachtung gemacht, daß sogar schon bei nichtbearbeiteten Cuvetten aus pyrolytischem Graphit eine geringfügige Erhöhung der Reaktivität im Vergleich zu durch Nachbeschichtung "passivierten" Cuvetten feststell-bar ist. Dieser Effekt ist wie folgt zu erklären:
Die Innenfläche (innere Oberfläche) "entsteht" beim Abziehen des Cuvetten-Rohkörpers von dem bei der Pyrographitabscheidung verwendeten Substratkern. Diese substratnahe "innere" Fläche hat einen etwas höheren, strukturbedingten Fehlordnungsgrad als die "natürlich" gewachsene äußere Oberfläche und infolgedessen eine etwas höhere Reaktivität als letztere. Dies konnte beispielsweise in Oxidationsversuchen eindeutig durch den Nachweis höherer Oxidationsraten nachgewiesen werden. Stärker ausgeprägt ist allerdings die Reaktivität einer durch mechanische oder chemische Nachbehandlung aufgerauhten Oberfläche.

## 2. Thermisch-träge Masse und mechanische Festigkeit

Es wurde gefunden, daß die erfindungsgemäßen AAS-Cuvetten aus formbearbeitetem nicht nachbeschichtetem oder versiegeltem pyrolytischem Graphit bei gleicher oder sogar erhöhter Festigkeit (axialer Kompressionsdruck) mit wesentlich geringeren Wandstärken und damit auch wesentlich geringerer Masse hergestellt werden können als handelsübliche Graphitcuvetten mit oder ohne Pyrographitbeschichtung. Dies bedeutet, daß bei gleicher Energieeinspeisung - bei sonst vergleichbaren Abmessungen von Länge und Durchmesser, d.h. insbesondere bei vergleichbarer frei abstrahlender äußerer Oberfläche - zum Teil beträchtlich höhere Aufheizgeschwindigkeiten zu erreichen sind. Hohe Aufheizgeschwindigkeiten sind von großer Bedeutung für die Zuverlässigkeit und Genauigkeit des Analysenergebnisses. Im Vergleich mit Cuvetten aus konventionellen Werkstoffen (z.B. aus Elektrographit) stellt sich darüberhinaus bei nur aus pyrolytischem Graphit bestehenden Cuvetten infolge der ausgezeichneten Wärmeleitfähigkeit sowohl in axialer als auch in tangentialer (azimutaler) Richtung eine homogene Temperatur-

0088475
PHD 82-030 EP

verteilung sehr schnell ein.

Eine besonders effektive Beheizungsart ist die induktive Erwärmung der Pyrographitcuvetten mittels Mittelfrequenz- oder Hochfrequenzenergie, weil dabei

a) Die Energieeinspeisung berührungslos erfolgt und Verluste durch Wärmeableitung über die normalerweise üblichen, meistens gekühlten Kontakte entfallen,

b) sich eine homogene und konstante Temperaturverteilung einstellt, die sich praktisch über die gesamte Cuvettenlänge erstreckt. Es gibt also praktisch keine "kalten" Cuvettenenden, an denen Analysensubstanz kondensieren könnte und somit das Ergebnis nachfolgender Analysen beeinträchtigen könnte,

c) durch wechselseitige Anpassung der Wandstärken der Cuvetten an die Arbeitsfrequenz unter Berücksichtigung des Skin-Effektes die thermisch träge Masse und damit die Aufheizgeschwindigkeiten optimalisiert werden können,

d) im Gegensatz zur (konventionellen) Widerstandserhitzung (Joul'sche Wärme) technisch vorteilhaftere Verhältnisse von Strom und Spannung (niedrigere Ströme bei höheren Spannungen) realisiert werden können und damit beispielsweise schwere Transformatoren für hohe Heizströme entbehrlich werden.

Anmerkung:

Da bei induktiver, kontaktfreier Beheizung auch keine mechanischen Kräfte (Kompression in axialer Richtung) auf die Cuvette wirken, ist die Frage einer geeigneten Wandstärke und damit einer hohen Aufheizgeschwindigkeit praktisch nur von den präparativen Möglichkeiten und einer erwarteten Mindestlebensdauer abhängig. AAS-Cuvetten normaler Abmessungen ($1 \approx 20$ bis $30$ mm, $d \approx 5$ bis $10$ mm) sollten mit Wandstärken $< 100$ $\mu$m herstellbar sein.

## 3. Effizienz und Kosten

Wie zahlreiche bisher durchgeführte Tests ergeben haben, sind die im vorstehenden beschriebenen AAS-Cuvetten den konventionellen Cuvetten aus Elektrographit überlegen. Dies gilt zunächst für die typischen analytischen Charakteristika "sensitivity, heating rate, no memoryeffect, life-time, uniformity of temperature distribution". Vergleicht man darüberhinaus die Herstellungskosten, insbesondere diejenigen für Cuvetten mit einfacher Zylindersymmetrie mit denjenigen für spektralreine Elektrographit-Cuvetten, besonders für solche mit zusätzlicher protektiver Schicht aus pyrolytischem Graphit, so haben die bisher durchgeführten Kostenabschätzungen ergeben, daß die Herstellungskosten für reine Pyrographitcuvetten keinesfalls höher ausfallen. Insofern trifft auch die in der DE-AS 23 23 774 gemachte Feststellung, die Kosten für Pyrographitcuvetten seien "untragbar", in ihrer allgemein gehaltenen Form nicht zu.

Die Erfindung wird anhand einer Zeichnung und eines Ausführungsbeispiels näher erläutert. In der Zeichnung zeigen

Fig. 1    eine AAS-Cuvette für Horizontalbetrieb im Schnitt und

Fig. 2   eine graphische Darstellung der Aufheizgeschwindigkeit verschiedener AAS-Cuvetten.

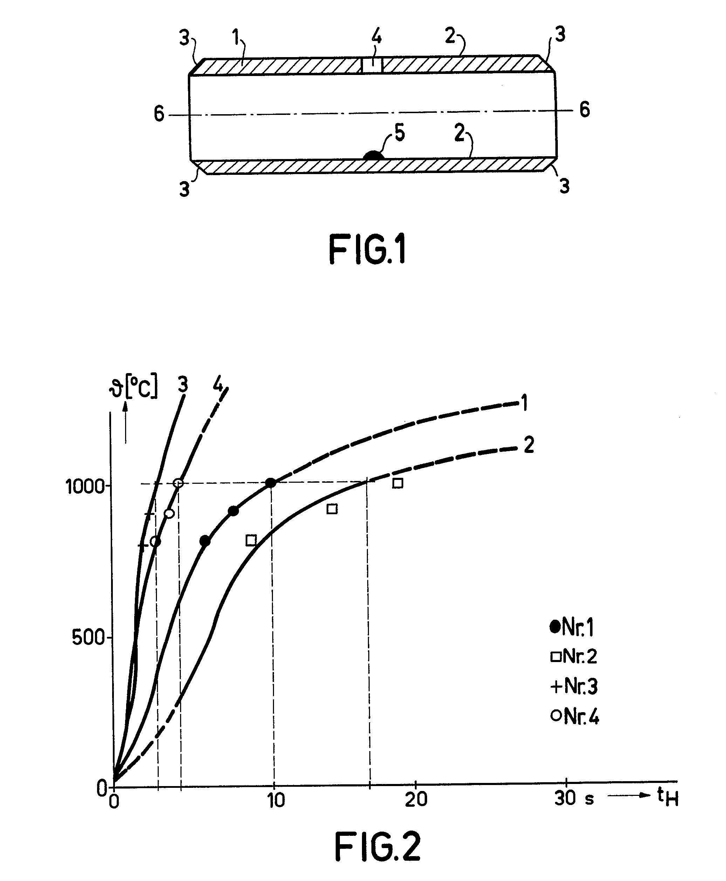

Die in Fig. 1 dargestellte Cuvette besteht aus einem
Grundkörper 1 aus pyrolytischem Graphit, dessen Außen-
und Innenflächen 2 durch mechanische Abtragung bearbeitet
sind. Die Cuvette weist Kontaktflächen 3 an den Enden
auf. Eine in der Wand der Cuvette angebrachte Bohrung 4
dient zur Beschickung der Cuvette mit Analysensubstanz 5.
Der Meßstrahl passiert im Betrieb die Cuvette längs der
Linie 6-6.

Beispiel:   Herstellung von Cuvetten 5,4/5,0 mmØ x 28 mm lg.

a)   Abscheidung

In einem "hot wall"-Reaktor wurden 250 Stück zylindrischer
Stäbe aus Elektrographit von ca. 75 mm Länge und 5 mm
Durchmesser aufgestellt (auf Trägerplatten aus Graphit
in 4 Etagen). Nach Evakuieren des Reaktorgefäßes auf p =
$10^{-3}$ mbar und Hochheizen der Reaktorkammer auf 2100 $^{\circ}$C
(innerhalb von 2 h) wurde in die Reaktorkammer ein niedrigmolekulares Kohlenwasserstoffgas (Propan $C_3H_8$) eingelassen. Die einströmende Gasmenge und die Absaugleitungen
des angeschlossenen Pumpensystems wurden so einreguliert,
daß sich unter durchströmendem Gas im Reaktor ein Totaldruck von 2,4 bis 2,5 mbar einstellte. Nach 30 h wurde
die Gaszufuhr abgestellt und das System unter Vakuum
abgekühlt. Nach Abkühlung wurden die Substratstäbe entnommen. Sie waren mit einer Schicht aus pyrolytischem
Graphit bedeckt, die je nach Position im Reaktor eine
Dicke zwischen 250 µm und 500 µm hatte - entsprechend

einer Durchmesserzunahme von mindestens 0,5 mm und 1,0 mm. Die die Substrate umhüllende Pyrographitschicht wurde dann vom Substratkern abgezogen und lag somit als ca. 70 mm langes Pyrographitröhrchen von ca. 5,0 mm Innendurchmesser und 5,5 mm bis 6,0 mm Außendurchmesser vor. Diese Röhrchen wurden als Rohkörper für Cuvetten der Weiterbearbeitung zugeführt.

b)  <u>Bearbeitung</u>

Aus den unter a) genannten Rohkörpern wurden mittels Trennscheibe zunächst 28,0 mm lange Röhrchen geschnitten. Diese Röhrchen wurden dann auf einer Rundschleifmaschine mittels diamantbestückter Schleifscheibe auf eine uniforme Wanddicke von 200 $\mu$m heruntergeschliffen und anschließend unter Zuhilfenahme einer Bohrlehre mit dem in der Rohrwandmitte befindlichen Einfülloch versehen.

Nach der Bearbeitung wurden die fertigen AAS-Cuvetten einer Reinigung in mehreren Schritten unterzogen

 a) Reinigen in einem Freon-gefüllten Ultraschallbad mit Abschlußreinigung in Freondampf

 b) Glühen unter Vakuum ($p < 10^{-4}$ mbar) bei $\vartheta = 1800$ °C eine Stunde lang.

c)  <u>Allgemeine Eigenschaften</u>

Die nach a) und b) hergestellten und nachbehandelten AAS-Cuvetten aus pyrolytischem Graphit hatten im Mittel eine Masse von ca. 0,15 g. Bei der Ausmessung ergab sich eine Änderung im Innendurchmesser von ca. 0,1 mm,

0088475

PHD 82-030 EP

bedingt durch die thermische Ausdehnung des Substratkerns bei Hochheizen auf Abscheidungstemperatur
(2000 °C bis 2100 °C). Die tatsächliche Wandstärke betrug
demnach im Mittel 150 $\mu$m. Dies entspricht einem
Volumen des Cuvettenkörpers von ca. 0,0693 $cm^3$ oder
einem mittleren spezifischen Gewicht von $\gamma$ = 2,165 $gcm^{-3}$,
was durch zahlreiche pyknometrische Messungen bestätigt
wurde. Die Festigkeit gegen axialen Kompressionsdruck
betrug im Mittel $\sigma_k$ = 3,2 $kpmm^{-2}$, was einer Kontaktkraft (oder Festigkeit) bis zu $P_k \approx$ 8 kg entspricht.


### d) Aufheizgeschwindigkeit


Es wurden einige vergleichende Untersuchungen gemacht,
bei denen Graphit- bzw. Pyrographitkörper in einem hochfrequenten elektromagnetischem Feld (f = 630 kHz)
konstant gehaltener Nennleistung aufgeheizt wurden. Es
wurde jeweils die Zeit gemessen (in s), die benötigt
wurde, um nach Einschalten des HF-Generators (t = 0) die
Temperaturen $\vartheta$ = 800 °C, 900 °C und 1000 °C zu erreichen.
Aus diesen Versuchen wurden 4 Proben ausgewählt, die
alle die gleiche Länge haben (l = 28 mm) und sich nur
werkstoffmäßig und in den Durchmessern sowie den Massen
voneinander unterscheiden. Im einzelnen handelt es sich
um die Proben

Nr. 1,    handelsübliche AAS-Cuvette aus Elektrographit
mit Pyrographit-Schutzschicht, Außendurchmesser 8,1 mm, Innendurchmesser 6,2 mm,
Masse 0,960 g.

Nr. 2,    Graphitrohr mit gleichem Außendurchmesser wie
Nr. 1, jedoch ohne Pyrographitschicht, Masse
0,591 g.

Nr. 3,    Pyrographitrohr, Außendurchmesser 7,5 mm, Innendurchmesser 7,2 mm, Masse 0,256 g.

Nr. 4,    Pyrographitcuvette gemäß Beispiel mit 5,4 mm Außendurchmesser, Masse 0,153 g.

Die Ergebnisse sind in Fig. 2 zusammengestellt und zeigen, daß die für die Aufheizgeschwindigkeit entscheidende Materialkomponente der pyrolytische Graphit ist. Der schnellere Temperaturanstieg von Probe Nr. 3 gegenüber Nr. 4 ist dadurch zu erklären, daß infolge etwas größeren Außendurchmessers die Anpassung an das vorgegebene elektromagnetische Feld etwas günstiger ist. Es sei noch darauf hingewiesen, daß bei optimaler Feldanpassung ($d_{Probe}/d_{Spule}$) und Dosierung der HF-Leistung noch schnellere Temperaturanstiege zu erreichen sind.

0088475

PHD 82-030 EP

## PATENTANSPRÜCHE:

1.  Cuvette für die Atom-Absorptions-Spektrometrie, die aus einem hohlen Grundkörper aus pyrolytischem Graphit besteht, der außen und/oder innen durch mindestens stellenweise mechanische Abtragung bearbeitet ist.
dadurch gekennzeichnet, daß die bearbeiteten Flächen (2) die Außen- bzw. Innenfläche der Cuvette bilden.

2.  Cuvette nach Anspruch 1,
dadurch gekennzeichnet, daß der hohle Grundkörper (1) ein Zylinder bzw. ein Rohr ist.

3.  Cuvette nach Anspruch 1 oder 2,
dadurch gekennzeichnet, daß die Wanddicke des Grundkörpers 50 $\mu$m bis 1000 $\mu$m, vorzugsweise 100 $\mu$m bis 300 $\mu$m beträgt.

FIG.1

FIG.2